# EUROPEAN PATENT APPLICATION

(11) **EP 4 567 732 A1**
(43) Date of publication of application: **11.06.2025**
(21) Application number: 24215804.6
(22) Date of filing: 27.11.2024
(51) Int. Cl.: G06T 7/33, G06T 7/11

(54) **STRUCTURE-AIDED VISUAL LOCALIZATION (SAVLOC)**

(30) Priority: 08.12.2023 US 202318533422
(71) Applicant: Nokia Solutions and Networks Oy, 02610 Espoo (FI)
(72) Inventor: HUANG, Howard, New York (US); SURIANARAYANAN, Bharath, Jersey City (US); MANDEL, Yehonatan, Kibbutz Afek (IL); SAHOO, Pratyush Kumar, Jersey City (US); SURIYARACHCHI, Chethana, Piscataway (US); WANG, Chenyu, Jersey City (US)
(74) Representative: Nokia EPO representatives

(57) **Abstract**

An approach is provided for structure-aided visual localization (SAVLoc). The approach involves, for example, processing an image captured by a camera device to determine one or more pixel coordinates of one or more structural components depicted in the image. The approach also involves determining an approximate pose of the camera device at a time the image was captured and a correspondence of the one or more structural components to one or more known components based on the approximate. The approach further involves querying a database for one or more location coordinates of the one or more known components based on the correspondence. The approach further involves computing a pose estimation of the camera device based on one or more location coordinates and the one or more pixel coordinates.

## Description

### TECHNICAL FIELD

The various example embodiments described herein generally relate to image-based localization.

### BACKGROUND

Autonomous navigation of mobile agents (e.g., drones, robots, etc.) generally relies on localizing the agents within their operating environments to a high degree of accuracy (e.g., centimeter-level accuracy) for safe operation. This is particularly true in industrial environments with many potential hazards and objects for the agents to avoid or navigate around. Therefore, there are significant technical challenges with providing accurate and efficient localization in such environments.

### SOME EXAMPLE EMBODIMENTS

Therefore, there is a need for structure-aided visual localization (also referred to herein as SAVLoc) to provide high accuracy localization while also minimizing computational complexity.

According to one example embodiment, an apparatus comprises at least one processor, and at least one memory storing instructions that, when executed by the at least one processor, cause the apparatus at least to process an image captured by a camera device to determine one or more pixel coordinates of one or more structural components depicted in the image. The apparatus is also caused to determine an approximate pose of the camera device at a time the image was captured. The apparatus is further caused to determine a correspondence of the one or more structural components to one or more known components based on the approximate pose. The apparatus is further caused to query a database for one or more location coordinates of the one or more known components based on the correspondence. The apparatus is further caused to compute a pose estimation of the camera device based on one or more location coordinates and the one or more pixel coordinates.

According to another example embodiment, a method comprises processing an image captured by a camera device to determine one or more pixel coordinates of one or more structural components depicted in the image. The method also comprises determining an approximate pose of the camera device at a time the image was captured. The method further comprises determining a correspondence of the one or more structural components to one or more known components based on the approximate pose. The method further comprises querying a database for one or more location coordinates of the one or more known components based on the correspondence. The method further comprises computing a pose estimation of the camera device based on one or more location coordinates and the one or more pixel coordinates.

According to another example embodiment, a non-transitory computer-readable storage medium comprising program instructions that, when executed by an apparatus, cause the apparatus to process an image captured by a camera device to determine one or more pixel coordinates of one or more structural components depicted in the image. The apparatus is also caused to determine an approximate pose of the camera device at a time the image was captured. The apparatus is further caused to determine a correspondence of the one or more structural components to one or more known components based on the approximate pose. The apparatus is further caused to query a database for one or more location coordinates of the one or more known components based on the correspondence. The apparatus is further caused to compute a pose estimation of the camera device based on one or more location coordinates and the one or more pixel coordinates.

According to another example embodiment, a computer program comprising instructions which, when executed by an apparatus, cause the apparatus to process an image captured by a camera device to determine one or more pixel coordinates of one or more structural components depicted in the image. The apparatus is also caused to determine an approximate pose of the camera device at a time the image was captured. The apparatus is further caused to determine a correspondence of the one or more structural components to one or more known components based on the approximate pose. The apparatus is further caused to query a database for one or more location coordinates of the one or more known components based on the correspondence. The apparatus is further caused to compute a pose estimation of the camera device based on one or more location coordinates and the one or more pixel coordinates.

According to another example embodiment, an apparatus comprises means for processing an image captured by a camera device to determine one or more pixel coordinates of one or more structural components depicted in the image. The apparatus also comprises means for determining an approximate pose of the camera device at a time the image was captured. The apparatus further comprises means for determining a correspondence of the one or more structural components to one or more known components based on the approximate pose. The apparatus further comprises means for querying a database for one or more location coordinates of the one or more known components based on the correspondence. The apparatus further comprises means for computing a pose estimation of the camera device based on one or more location coordinates and the one or more pixel coordinates.

According to one example embodiment, an apparatus comprises image processing circuitry configured to perform processing an image captured by a camera device to determine one or more pixel coordinates of one or more structural components depicted in the image. The image processing circuitry is also configured to perform determining an approximate pose of the camera device at a time the image was captured. The apparatus further comprises localization circuitry configured to perform determining a correspondence of the one or more structural components to one or more known components based on the approximate pose. The localization circuitry is further configured to perform querying a database for one or more location coordinates of the one or more known components based on the correspondence. The localization circuitry is further configured to perform computing a pose estimation of the camera device based on one or more location coordinates and the one or more pixel coordinates.

According to one example embodiment, a system comprises one or more devices including one or more of a cloud server device, an edge device, an internet of things (IoT) device, a user equipment device, or a combination thereof. The one or more devices are configured to process an image captured by a camera device to determine one or more pixel coordinates of one or more structural components depicted in the image. The one or more devices are also configured to determine an approximate pose of the camera device at a time the image was captured. The one or more devices are further configured to determine a correspondence of the one or more structural components to one or more known components based on the approximate pose. The one or more devices are further configured to query a database for one or more location coordinates of the one or more known components based on the correspondence. The one or more devices are further configured to compute a pose estimation of the camera device based on one or more location coordinates and the one or more pixel coordinates.

According to a further embodiment, a device (e.g., a camera device, a mobile agent, or component thereof) comprises at least one processor; and at least one memory including a computer program code for one or more programs, the at least one memory and the computer program code configured to, with the at least one processor, cause the device to process an image captured by a camera device to determine one or more pixel coordinates of one or more structural components depicted in the image. The device is also caused to determine an approximate pose of the camera device at a time the image was captured. The device is further caused to determine a correspondence of the one or more structural components to one or more known components based on the approximate pose. The device is further caused to query a database for one or more location coordinates of the one or more known components based on the correspondence. The device is further caused to compute a pose estimation of the camera device based on one or more location coordinates and the one or more pixel coordinates.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

According to some aspects, there is provided the subject matter of the independent claims. Some further aspects are defined in the dependent claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The example embodiments of the invention are illustrated by way of examples, and not by way of limitation, in the figures of the accompanying drawings:
FIG. 1A is a diagram of providing structure-aided visual localization (SAVLoc), according to one example embodiment;
FIG. 1B is a diagram of providing SAVLoc based on optional visual-inertial odometry, according to one example embodiment;
FIG. 1C is a diagram of providing SAVLoc based on optional visual odometry, according to one example embodiment;
FIG. 2A is a diagram of a SAVLoc implementation in a server, according to one example embodiment;
FIG. 2B is a diagram of a SAVLoc implementation on a device, according to one example embodiment;
FIG. 3 is a flowchart of a process for providing SAVLoc, according to one example embodiment;
FIG. 4 is a diagram of a segmented image with reprojected candidate objects/structures, according to one example embodiment;
FIG. 5 is a diagram illustrating overlapping horizontal and vertical structural components, according to one example embodiment;
FIG. 6 is a diagram of a pose estimation algorithm when viewing overlapping horizontal and vertical structural components, according to one example embodiment;
FIG. 7 is a diagram illustrating a horizontal structural component, according to one example embodiment;
FIG. 8 is a diagram illustrating ambiguities when viewing a horizontal structural component, according to one example embodiment;
FIG. 9 is a diagram of a pose estimation algorithm when viewing a horizontal structural component, according to one example embodiment;
FIG. 10 is a diagram of a segmented image with a rectangular structure, according to one example embodiment;
FIG. 11 is a diagram of a drone path tracked using SAVLoc, according to one example embodiment;
FIG. 12 is a diagram of visual odometry, according to one example embodiment;
FIG. 13 is a diagram of matched features between successive frames, according to one example embodiment;
FIG. 14 is a diagram of hardware that can be used to implement example embodiments; and
FIG. 15 is a diagram of a chip set that can be used to implement example embodiments.

### DESCRIPTION OF SOME EMBODIMENTS

Examples of a method, apparatus, and computer program for providing structure-aided visual localization (SAVLoc), according to one example embodiment, are disclosed in the following. In the following description, for the purposes of explanation, numerous specific details and examples are set forth to provide a thorough understanding of the embodiments of the invention. It is apparent, however, to one skilled in the art that the embodiments of the invention may be practiced without these specific details or with an equivalent arrangement. In other instances, structures and devices are shown in block diagram form to avoid unnecessarily obscuring the embodiments of the invention.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. In addition, the embodiments described herein are provided by example, and as such, "one embodiment" can also be used synonymously as "one example embodiment." Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

As used herein, "at least one of the following: <a list of two or more elements>," "at least one of <a list of two or more elements>," "<a list of two or more elements> or a combination thereof," and similar wording, where the list of two or more elements are joined by "and" or "or", mean at least any one of the elements, or at least any two or more of the elements, or at least all the elements.

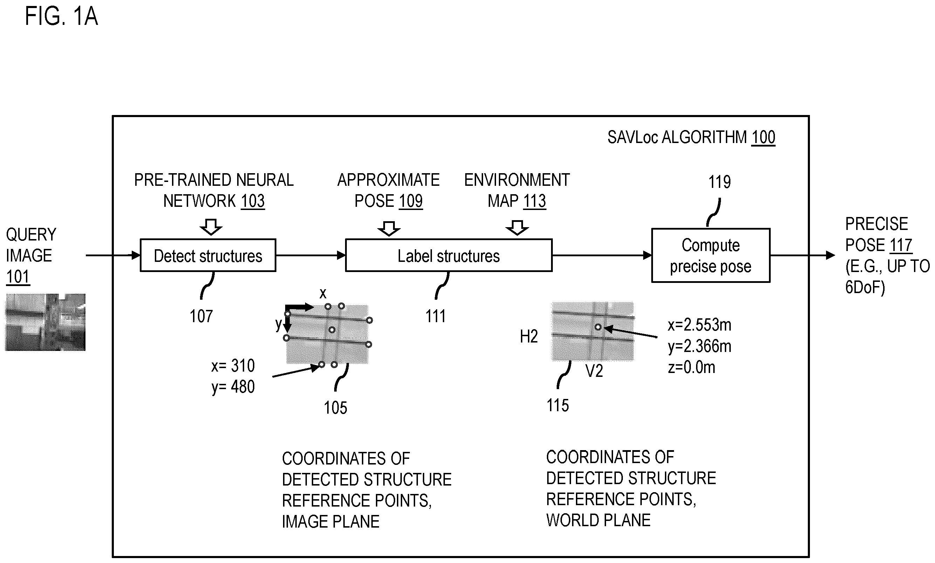

FIG. 1A is a diagram of providing structure-aided visual localization (SAVLoc), according to one example embodiment. As used herein, the term "mobile agent" or "agent" refers to a mobile platform or stationary/fixed platform that is designed to operate autonomously. For example, mobile agents can be a drone, robot, or any other mobile device, and stationary agents can be infrastructure cameras, surveillance cameras, fixed edge computing devices, and/or the like. Mobile agents generally are equipped with the ability to move within their environment and perform tasks based on their programming and sensor inputs. In other words, mobile agents are typically designed to operate autonomously, meaning they can make decisions and perform tasks without direct human intervention. This autonomy is used for tasks such as navigation, obstacle avoidance, and goal achievement. Mobile agents rely on sensors to perceive their environment. These sensors can include cameras, LiDAR (Light Detection and Ranging), radar, ultrasonic sensors, and other equivalent technologies. The information gathered from these sensors allows the mobile agent to make informed decisions about its surroundings. Generally, mobile agents need to navigate through their environment to reach a destination or perform a specific task. Navigation algorithms may involve path planning, obstacle avoidance, and localization techniques to ensure the mobile agent can move efficiently and safely. Mobile agents can play significant roles in various fields including but not limited to industrial automation, surveillance, logistics, agriculture, and/or the like in both indoor and outdoor applications.

Localization, in the context of mobile agents such as drones and robots (as well as in general technology and computing), refers to the process of determining the position or location of a device within its environment. More specifically, localization enables autonomous systems to navigate, interact with their surroundings, and execute tasks accurately.

Traditional localization techniques include Fiducial-based Localization (FidLoc), Hierarchical Localization (HLOC), and Ultrawideband Localization (UWB), but each technique presents technical challenges for implementation.

FidLoc is a visual based solution in which 2D fiducial tags are distributed through an environment. The size and location of the tags is precisely known (with cm-level accuracy) so that given an image of a tag captured by a drone camera, the six degrees of freedom (6DoF) pose can be computed. Centimeter-level accuracy can be achieved but only when a tag is seen by the camera. A denser deployment of tags results in more robust tracking, but this results in higher overhead costs. In some situations, the cost of tag deployment can be a significant fraction ("30%) of the total deployment cost.

HLOC is a vision-based solution which relies on extracting visual features from a query image captured by a mobile camera and matching the features with those in a pre-generated map database. The map database is generated from a video captured in the environment of interest by a mobile camera. 6DoF camera pose with cm-level localization accuracy can be achieved. This technique is well suited for visually rich environments. However, the map database would need to be updated whenever there are significant visual changes to the environment.

UWB is a radio-based solution that achieves sub-meter localization accuracy when there is a line-of-sight (LOS) path between wired infrastructure node(s) and the device. 3D localization can be obtained, but accurate orientation estimation is not available. In cluttered environments, a high density of infrastructure nodes is required to provide LOS paths with multiple nodes. Also, the location of the nodes needs to be determined with cm-level accuracy.

To enable drone navigation (e.g., in indoor industrial environments), the technical problem is to determine a drone's pose accurately (e.g., cm-level location and degree-level orientation), in real time (e.g., approximately 5Hz). In some embodiments, there are additional technical problems associated with visual localization in visually repetitive environments such as warehouses consisting of identical shelf structures or outdoor ports with identical shipping containers.

As discussed above, the problems with the existing solutions are:
FidLoc: The overhead cost of installing and calibrating fiducial tags is high. In some cases, the FidLoc overhead cost can be up to 30% of the total system cost.
HLOC: Because HLOC is based on unique visual features, it is not suited for repetitive warehouse environments. If features are extracted from images of goods placed on the shelves, then the map would need to be updated whenever the goods are moved. In general, the cost of creating a map in a large environment is high.
UWB: The overhead cost of installing wired infrastructure nodes is high, and it does not provide accurate orientation estimates.

To address these technical challenges, the various example embodiments described herein introduce a capability to provide structure-aided visual localization referred to herein as "SAVLoc". In one embodiment, SAVLoc is a visual-based localization technique in which an image, taken by a camera (e.g., equipped on an agent or mobile agent), is used to estimate the camera's pose (e.g., 3D location and/or 3D orientation with respect to the world coordinate frame). The various example embodiments, for instance, are used to identify known structural components in an image and to use their world-frame coordinates to determine the camera pose. The camera is fixed with a known spatial relationship to an agent (e.g., a mobile agent such as a drone, forklift, robot), so that the pose of the agent can be derived from the camera's pose. By way of example, possible structures used for SAVLoc include but are not limited to shelves in a warehouse, containers in a port, door frames, window frames, lights (e.g., overhead lights in an office/warehouse), beams, and/or any other structural components (e.g., edges, intersections, openings, etc.) in an environment. The various example embodiments are based on the geometric information about the structure being known, such as their dimensions and coordinates of edges and corners.

In one embodiment, the camera's pose can be determined with respect to any number of degrees of freedom such as six degrees of freedom (6DoF) or three degrees of freedom (3DoF). 6DoF refers to the ability of the camera and/or mobile agent to move freely in three-dimensional space. These six degrees of freedom represent all possible independent movements that an object can make and include: (1) translation along an x-axis, (2) translation along a y-axis, (3) translation along z-axis, (4) rotation around the x-axis (e.g., roll), (5) rotation around the y-axis (e.g., pitch), and (6) rotation around the z-axis (e.g., yaw). For example, a drone with 6DoF capability can translate (move) in any direction and rotate (change orientation) along all three axes, enabling it to navigate complex environments. 3DoF refers to the ability of a mobile agent to move freely in three-dimensional space along specific axes while having limited rotational freedom (e.g., a mobile agent such as a robot or terrestrial vehicle that is limited to traveling on the ground or surface). In other words, in a 3DoF device, there is no rotational freedom; the mobile agent can only move along the three axes.

In one embodiment, SAVLoc can be used in autonomous drone navigation as part of an autonomous industrial monitoring system. Example use cases include but are not limited to scanning barcodes on boxes in a warehouse and providing video footage of plants growing in an indoor vertical farm. It is noted that although the various example embodiments described herein discuss SAVLoc in the context of an example use case of a drone camera flying through a warehouse with repetitive shelf structures, it is contemplated that the various embodiments are applicable to localization of any type of mobile agent in any environment (e.g., indoor or outdoor).

As shown in FIG. 1A, in one example embodiment, the SAVLoc algorithm 100 starts with an input of a single image of the environment (e.g., query image 101) captured by a drone camera (not shown). The image 101, for instance, can be color or black and white and of any resolution or quality. In this example, the resolution is VGA quality at 480x640 pixels.

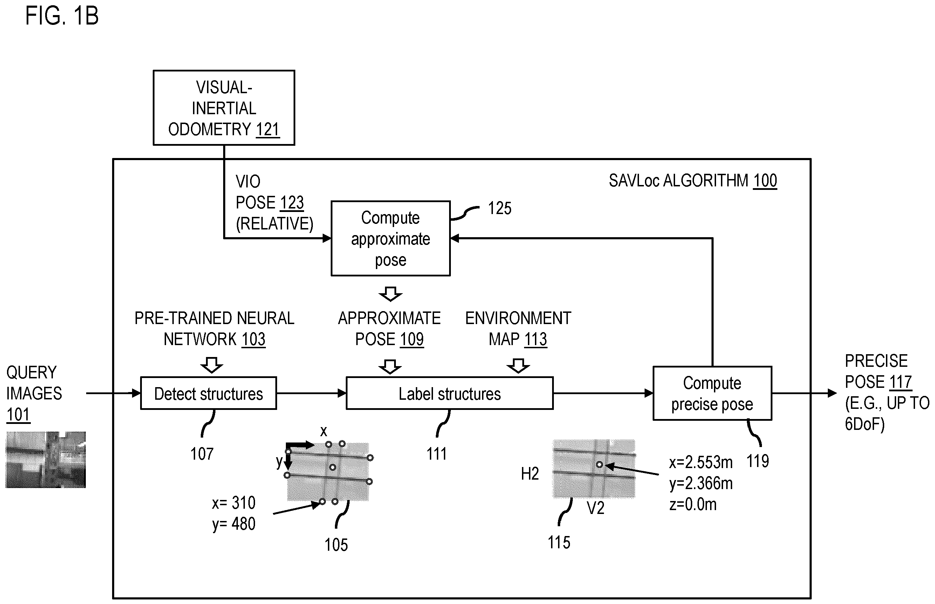

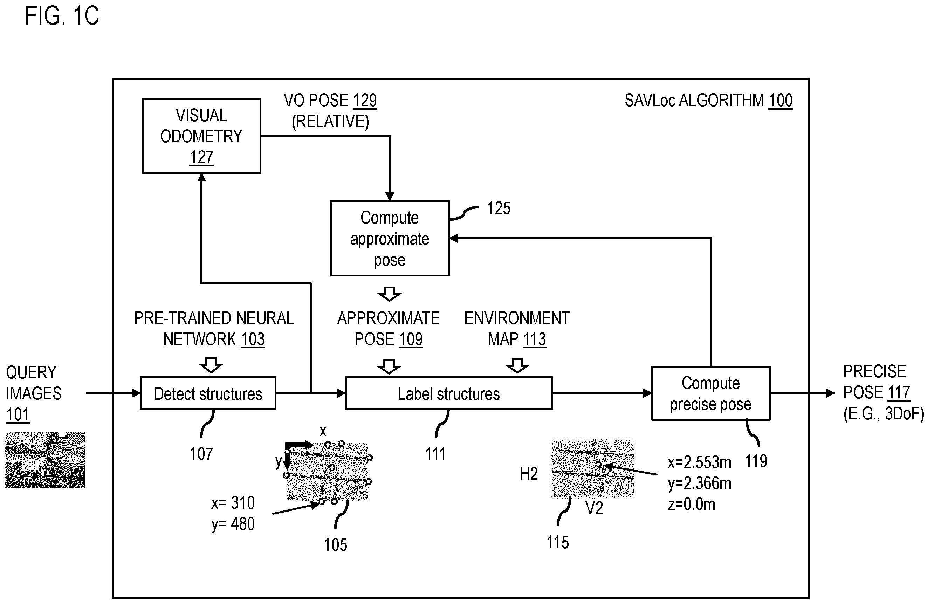

In one example embodiment, the SAVLoc process 100 consists of three steps:
(1) Segmentation. Pixels for the horizontal and vertical shelf components (e.g., more generally, structural components) are identified using, e.g., a pre-trained neural network 103 or equivalent object recognition mechanism to detect structures and/or their boundaries which are then are highlighted (e.g., as shown in segmented image 105 with reference points of detected components in the image frame) in block 107. In this example, segmented image 105 highlights the horizontal and vertical structural components of the shelves as darker shaded lines. For example, the pixel coordinates of where the detected components intersect the edge of the image are determined (e.g., x = 310 and y = 480 starting in pixel coordinates with the origin at the top left corner of the image 105).
   In one embodiment, the pre-trained neural network is trained to identify pixels of the image 101 that correspond to one or more objects of interest. Then, a post-processing step can be applied to determine boundaries of the object(s) of interest in the image 101 from the segmented image 105, and a point (e.g., a centroid or other designated point) within the determined boundaries is identified to represent the detected object. In other embodiments, the pre-trained neural network 103 can be trained to identify objects of interest using bounding boxes. In this case, the representative point of the object can be determined based a centroid (or any other designated point) of the bounding box. In yet another embodiment, the pre-trained neural network 103 can be trained to directly output the boundaries, representative point, centroid, etc. of the detected objects of interest. It is noted that the above examples of image segmentation outputs from the pre-trained neural network 103 are provided by way of illustration and not as limitations. If no shelf structures or other structures detectable by the pre-trained neural network 103 are seen, the process 100 waits for the next image.
(2) Correspondence. Because of the repetitive nature of some structures (e.g., shelves, shipping containers, etc.) in the environment, there could be ambiguity about which structure (e.g., shelf) is seen. Using an approximate estimate 109 of the current pose (e.g., based on a prior pose and odometry estimates as further discussed with respect to FIGs. 1B and 1C below), the indices of the identified structure can be determined (e.g., horizontal element 2, vertical element 1) in block 111. The 3D world coordinates of the detected components can then be looked up in an environment map 113 of known structures such that their location coordinates are indicated in a world frame. In this example, the coordinates of the corners of the overlapping rectangular area are used to obtain segmented image 115 in which the pixel coordinates of the segmented image 105 are converted to a world frame (e.g., x = 2.553 m, y = 2.366 m, and z = 0.0 m).
(3) Pose estimation. From the 3D coordinates and corresponding 2D pixel coordinates, the pose 117 of the camera in the world frame can be computed geometrically in block 119.

The various embodiments of the SAVLoc process described herein have several technical advantages including but not limited to having low cost in terms of overhead because in built environments (e.g., warehouses, ports, etc.), the structural information is easily acquired from blueprints and datasheets (e.g., collectively referred to as blueprint data). It can also have low run-time costs by leveraging efficient, state-of-the-art neural networks for image segmentation. The remaining calculations for correspondence and pose estimation are very computationally light weight, thereby using less computational resources relative to traditional approaches.

It is contemplated that the approximate pose 109 can be obtained using any means. For example, the approximate pose 109 can be obtained using any other pose estimation modality known in the art. In one embodiment, the approximate pose 109 can be determined using odometry. Odometry, for instance, is a method used, e.g., in robotics and autonomous systems to estimate position and velocity by analyzing data from its motion sensors or equivalent. It relies on measuring the changes in position over time to track movement. The accuracy of odometry is based on how accurately the changes in position can be tracked over time. For example, as shown in FIG. 1B, visual-inertial odometry (VIO) (e.g., based on using inertial measurement units (IMUs) to track movement over time) can provide sufficient accuracy to support full 6DoF pose estimation. In the example of FIG. 1B, the SAVLoc algorithm 100 is illustrated to include input from VIO 121. VIO 121, for instance, can be performed on a mobile agent equipped with an IMU and VIO processing hardware, software, and/or circuitry. In one embodiment, VIO 121 tracks movement of the camera device and/or mobile agent since the last computed precise pose 117 to determine a VIO pose 123 relative to the last computed precise pose 117. The VIO pose 123 is combined with the last computed precise pose 117 to compute the approximate pose 109. The SAVLoc algorithm then proceeds as described in the various embodiments of FIG. 1A.

In one embodiment, as discussed above, the SAVLoc process can be applied in a 3DoF scenario as opposed, for instance, to a 6DoF scenario. In this scenario, the accuracy of the VIO is not needed, and visual odometry (VO) can be performed to track relative movement. In this way, VO can eliminate the IMU hardware needed to support VIO, thereby advantageously reducing or eliminating the computational complexity and hardware cost that is used for VIO. FIG. 1C is a diagram of providing SAVLoc based on optional VO, according to one example embodiment. The technical problem is to estimate a mobile agent's 3DoF pose in real time with respect to a world coordinate frame. It is noted that while SAVLoc (e.g., based on optional VIO as described with respect to FIG. 1B) can be used to provide full 6DoF pose, 3DoF pose can be sufficient to enable navigation of ground-based agents such as robots, forklifts, and workers.

The accuracy of the estimates depends on the use case, where the most aggressive performance targets are cm-level error in 2D location and degree-level error in yaw. The rate of pose estimation also depends on the use case. For example, robots moving at pedestrian speeds could require estimation rates of about 5Hz. Accordingly, the SAVLoc process can be simplified to using VO to estimate approximate pose input to the SAVLoc algorithm 100. In one embodiment, SAVLoc can be implemented more simply using ceiling mounted structures (e.g., lights, fire alarms, sprinklers, and/or the like) that are typically mounted at a known height to make mapping and/or related localization calculations less complex. In other words, VO based on such ceiling mounted structures can be used in the SAVLoc algorithm 100 when 3DoF pose estimation is sufficient. As shown in FIG. 1C, in one embodiment, the SAVLoc algorithm 100 can use VO 127 to provide a visual localization system where a camera attached to an agent of interest and pointing upwards, captures images 101 and uses ceiling structures such as lights to track the 3DoF camera pose (e.g., precise pose 117 at 3DoF). In other words, because the mobile agent is ground-based or otherwise fixed to a surface, the camera has a known height and has roll and pitch equal to zero, which in turn can be used to simplify the pose estimation process for 3DoF. One assumption of this approach is that human-occupied, indoor industrial environments will almost certainly have lights or other machine-detectable structures installed on the ceiling. Leveraging blueprints (e.g., blueprint data) that provide the locations of these lights or structures, various example embodiments of the SAVLoc algorithm 100 are able to achieve sub-meter accuracy for tracking ground-based agents, but it does so with much lower complexity in terms of overhead, tracking, and processing.

With respect to overhead, the SAVLoc algorithm 100 based on VO as illustrated in FIG. 1C does not require the expensive map generation process traditional approaches such as HLoc. Instead, they require knowledge of the known structures (e.g., an environment map 113 such as, but not limited to, a ceiling map of lights and other structures in 3D world coordinates) which can be acquired easily from blueprints (e.g., also referred to as blueprint data). The complexity of the SAVLoc algorithm of FIG. 1C would be lower than the shelf-based approach of FIG. 1A if the number of lights is fewer than the number of structural components (e.g., shelves, shipping containers, boxes, etc.). As previously discussed, the SAVLoc algorithm 100 also includes the training of neural networks 103 or equivalent for image segmentation of a sequence of input images 101 to identify or detect environmental structures 107. This process can be performed for each environment using a relatively small set of labeled images.

With respect to tracking, compared to the SAVLoc algorithm 100 of FIG. 1B at 6DoF which uses visual inertial odometry (VIO) (or other equivalent localization modality) for sophisticated 6DoF tracking, the SAVLoc algorithm 100 of FIG. 1C is able to operate with only visual VO 127 for 3DoF tracking. The 3DoF VO calculation is much simpler than 6DoF VIO, and VO does not require an inertial measurement unit (IMU). In other words, the SAVLoc algorithm 100 of FIG. 1C is a simplified embodiment of the SAVLoc process that can use VO 127 in place of VIO 121 to advantageously further reduce the complexity of various embodiments of visual localization described herein.

In one example embodiment, VIO 121 is the process of estimating an agent (e.g., drone) pose using both camera and inertial measurement unit (IMU) sensor inputs. VIO 121 is typically used to determine the relative pose change between time instances, and it suffers from drift due to biases in the IMU measurements. VIO 121 can be paired with SAVLoc to provide 6DoF pose estimation. In contrast, VO 127 forgoes the use of IMU inputs, and tracks the camera's movement and pose in a given environment based on the changes observed in consecutive or a sequence of images (e.g., based on structures detected by pre-trained neural network 103 over a sequence of images 101). More specifically, VO 127 estimates motion by matching features between images 101 and analyzing the spatial displacements of the features between images 101. The relative translation/movement and rotation between consecutive frames are used to update the camera's pose (e.g., VO pose 129) instead of measuring the relative movement and rotation using an IMU as done in VIO 121.

In one example embodiment, the processing consists of image segmentation 107, visual odometry 127, and relocalization (e.g., compute precise pose 119) to output a 3DoF pose estimation 117 in a world frame. By way of example, the entire processing for a single image takes about 20ms using a current server-grade GPU. In contrast, neural network processing for the traditional HLoc approach consists of visual feature extraction and matching and requires about 800ms per image on the same GPU.

Overall, the SAVLoc algorithm 100 based on optional VO 127 enables accurate localization in very large indoor environments with very low cost. It was shown to achieve sub-meter accuracy in a 20000m^2 warehouse with no added localization infrastructure. The overhead for digitizing the blueprint, creating a labeled training set, and training the segmentation network took only about 10 hours.

For this deployment, images captured by a drone camera are communicated in real-time to an on-premises edge server running the SAVLoc algorithm. The algorithm determines the 6DoF camera pose in real-time, and this pose is used by the AIMS autonomy software stack to guide the drone through the environment.

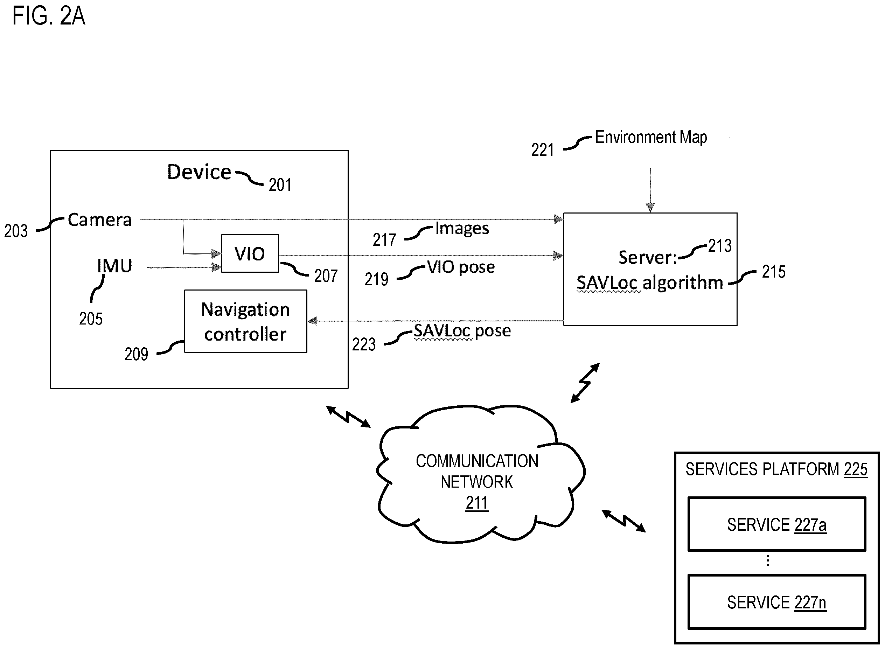

In one embodiment, the various embodiments described herein can be implemented in a client-server architecture or a device only architecture. For example, FIG. 2A is a diagram of a SAVLoc implementation in a server, according to one example embodiment. As shown, a device 201 (e.g., a mobile agent such as a drone, robot, forklift, etc.) is equipped with a camera 203, IMU 205 to provide data to a VIO module 207 (e.g., VIO hardware, software, and/or circuitry), and a navigation controller 209 to control navigation of the device 201. In one embodiment, the IMU 205 is not needed if performing 3DoF pose estimation based on VO instead of VIO. The device 201 has connectivity over a communication network 211 to a server 213 that executes a SAVLoc algorithm 215 according to the various embodiments described herein to compute a SAVLoc pose 223. The server 213 uses the SAVLoc algorithm 215 (e.g., as described with respect to various embodiments of FIGs. 1A-1C) to process images 217 from the camera, VIO pose 219 (e.g., approximate pose of the camera 203), and an environment map 221 of known structure dimensions and locations to compute the SAVLoc pose 223. The SAVLoc pose 223 is then transmitted back to the navigation controller 209 to autonomously navigate the device 201. In one embodiment, the communication of the SAVLoc pose 223 back to the device 201 is not necessary for some applications if the device 201 itself does not need to know its location. In another embodiment, the SAVLoc pose 223 can be transmitted to a service platform 225 and/or one or more services 227a-227n (also collectively referred to as services 227) for the service platform 225 and/or services 227 to provide one or more location-based services (e.g., mapping, navigation, autonomous operation, etc.) based on the SAVLoc pose 223.

In summary, in a server implementation, a query image 217 and a VIO pose estimate 219, relative to the previous query image pose, could be communicated from the device 201 (e.g., drone) to the server 213. The SAVLoc pose 223 would be computed at the server 213 and communicated back to the device 201 (e.g., drone) to be integrated with the flight controller process (e.g., navigation controller 209). In general, a server 213 could provide localization services for devices 201 (e.g., drones) in multiple environments. Hence during a service initialization phase, the device 201 (e.g., drone) could notify the server 213 which environment it is flying in. The server 213 then loads the appropriate structural information (e.g., database 221) to be used for every query from this device 201 (e.g., drone).

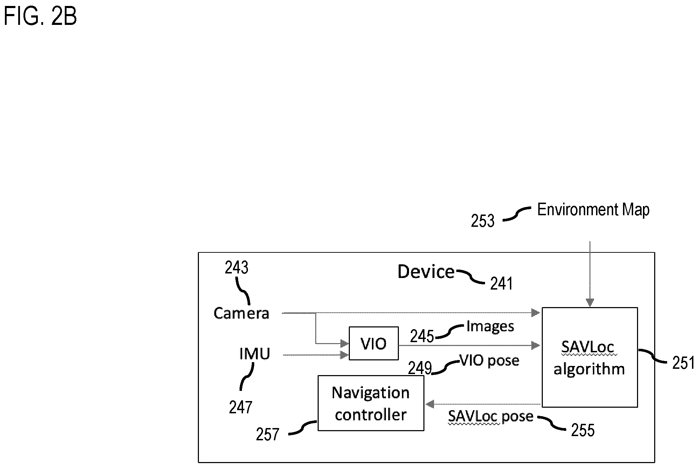

FIG. 2B is a diagram of a SAVLoc implementation on a device only, according to one example embodiment. As shown, the device 201 includes all components for performing the SAVLoc process as a standalone device. For example, the device 241 includes a camera 243 for capturing images 245 for localization and an IMU 247 for determining a VIO pose 249. The device 241 also includes a SAVLoc algorithm 251 for processing the images 245 and VIO pose 249 along with a database 253 of know structure dimensions and locations to compute a SAVLoc pose 255. In one embodiment, the database 253 can be downloaded to the device 241 during an initialization or pre-processing operation. The SAVLoc pose 255 that is then provided to the device 241's navigation controller 257. In this case, all SAVLoc functions are performed within the device 241 without aid of an external server. In some example embodiments, the device 241 can transmit the computed SAVLoc pose 255 to other external components (e.g., services platform 225 and/or services 227 as described above).

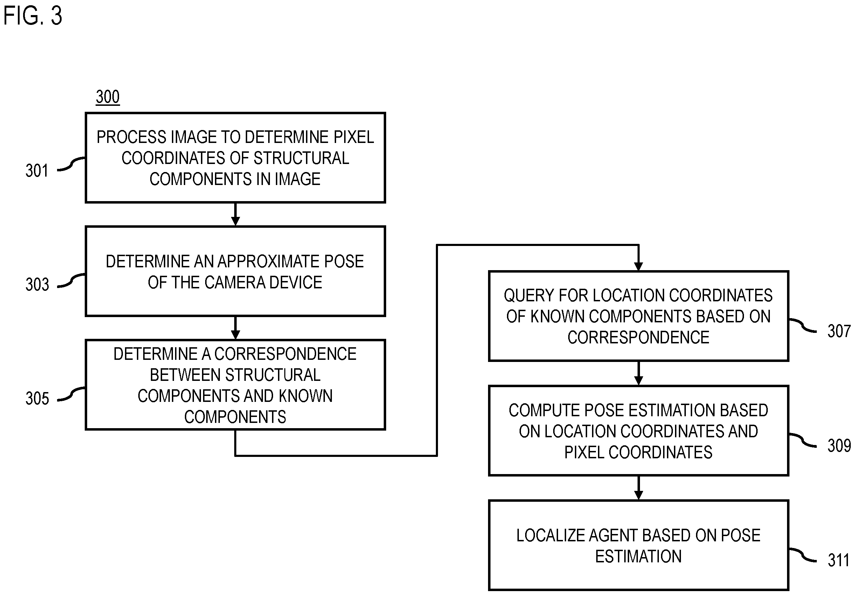

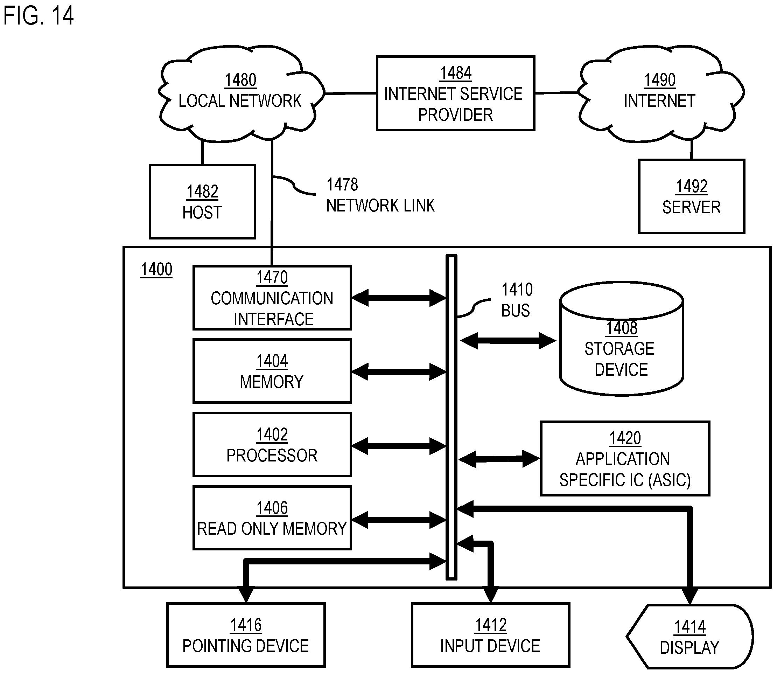

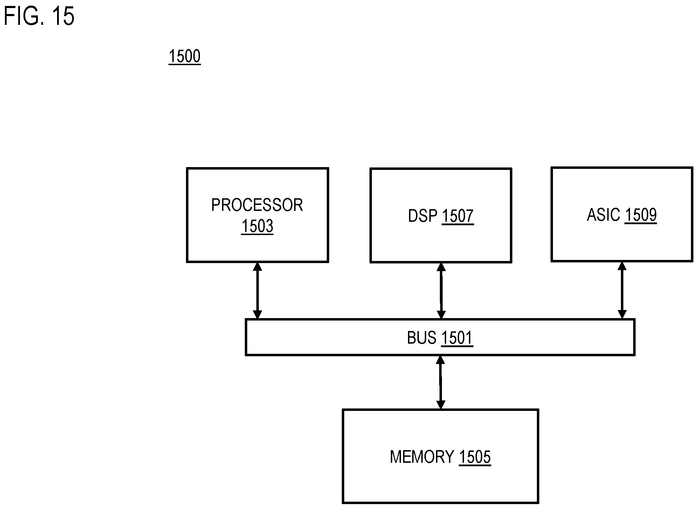

FIG. 3 is a flowchart of a process for providing SAVLoc, according to one example embodiment. In one example embodiment, the server 213 alone or in combination with the device 201 and/or 241 may perform one or more portions of a process 300 and may be implemented in/by various means, for instance, a chip set including a processor and a memory as shown in FIGs. 14 or 15 or in a circuitry, hardware, firmware, software, or in any combination thereof. In one example embodiment, the circuitry includes but is not limited to image processing circuitry and localization circuitry. As such, the server 213, device 201, device 241, and/or any associated component, apparatus, device, circuitry, system, computer program product, and/or non-transitory computer readable medium can provide means for accomplishing various parts of the process 300, as well as means for accomplishing embodiments of other processes described herein. Although the process 300 is illustrated and described as a sequence of steps, it is contemplated that various embodiments of the process 300 may be performed in any order or combination and need not include all of the illustrated steps.

At step 301, the image processing circuitry or other component of the server 213 and/or device 201/241 processes an image captured by a camera device (e.g., equipped on a mobile agent) to determine one or more pixel coordinates of one or more structural components depicted in the image. In one example embodiment, a mobile agent or mobile device associated with the agent includes a camera, IMU (if VIO is used to determine an approximate current pose for 6DoF pose estimation, or no IMU needs to be included if VO is used to determine an approximate current pose for 3DoF pose estimation), wireless modem, and compute capability to support VIO/VO. For example, an Android or equivalent device with built-in VIO from ARCore could be used. For the autonomous industrial monitoring use case, a VOXL1 module with built-in VIO or equivalent can be used for deployment.

In one embodiment, SAVLoc process for 2D rectangular structures (or any other designated structural component occurring within a selected environment). The process 300 illustrates various example embodiments for determining the 6DoF camera pose given an image of a repetitive 2D rectangular structure. However, it is contemplated that a similar process (e.g., with VO in place of VIO) can be performed for 3DoF pose estimation. In one example embodiment, the image has been undistorted to a pinhole image model using known camera intrinsics. Although the various embodiments described are described using an example use case of a warehouse application where the camera is pointed with a fixed angle (e.g., roughly horizontally) with respect to the ground plane, it is contemplated any other equivalent application (e.g., indoor or outdoor) are also applicable to the various embodiments.

In one example embodiment, the process 300 uses computer vision/image segmentation to detect structural components and their respective pixel coordinates in an image. For example, neural network architectures such as but not limited to Mask R-CNN and YOLO can be trained to segment structural components. As used herein, the term "structural component" refers to any physical object that occurs within an environment such as objects forming the infrastructure at a given site (e.g., shelves, lights, structural beams, door frames, window frames, containers, etc. that regularly occur within environment). In one example embodiment, the structural components are repetitive indicating that the components occur more than once or more than a specified number of times within the environment. Examples of repetitive structural components include but are not limited to shelves in warehouse, stacked shipping containers in a port facility, hospital beds in a hospital ward, doorways in a hotel, etc. The neural network could be trained on camera-captured images with hand-labeled object classes of structural components (e.g., horizontal and vertical shelf components). Alternatively, the network could be trained on synthetic rendered images whose domains have been transferred to the query image domain which could be specific, for example, to the environment lighting or image characteristics.

In one example embodiment, the segmentation neural network (e.g., Mask R-CNN, YOLO network or equivalent) can be trained for image segmentation using a set of labeled training images. If the number of objects to detect is small, then the labeling and training has low complexity. In one example embodiment, a custom network can be trained for each environment.

In one example embodiment, the network can be trained for enhanced segmentation. For example, for a given structural component, the network can be trained to segment different aspects. For example, if a downward facing camera is used for the warehouse drone use case, the network could be trained to segment the top faces of the horizontal structure separately from the front face. In doing so, additional geometric information could be used in pose estimation. In this way, the various embodiments of the pose estimation algorithm described herein can be generalized from a single face of a structure to account for multiple faces.

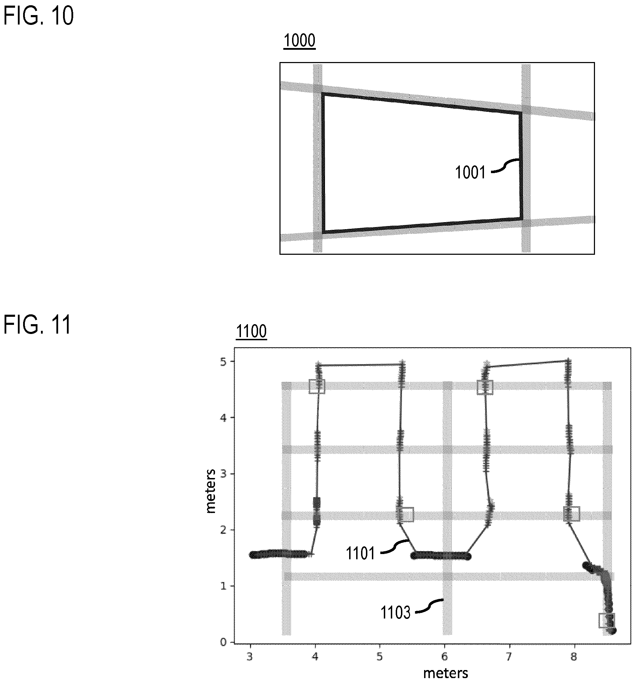

In one example embodiment, the various embodiments of the SAVLoc process described herein could be applied to structures other than the rectangular, horizontal, vertical, etc. structures discussed in the examples. In the warehouse example, if the camera is farther away from the shelf or if a wider angle lens is used, the openings of the shelves could be used as shown in example 1000 of FIG. 10 highlighting a rectangular opening 1001. Containers in a port could be used after estimating their poses. This could be accomplished using a small number of fixed infrastructure cameras already installed for surveillance. In general, any fixed structure, as long as its image can be segmented and its 3D coordinates in the world frame can be characterized so that the camera pose can be estimated from the 2D-3D correspondences. Then, given an image with segmented object pixels, the boundaries of the objects can be determined using algorithms for line fitting or convex hull construction.

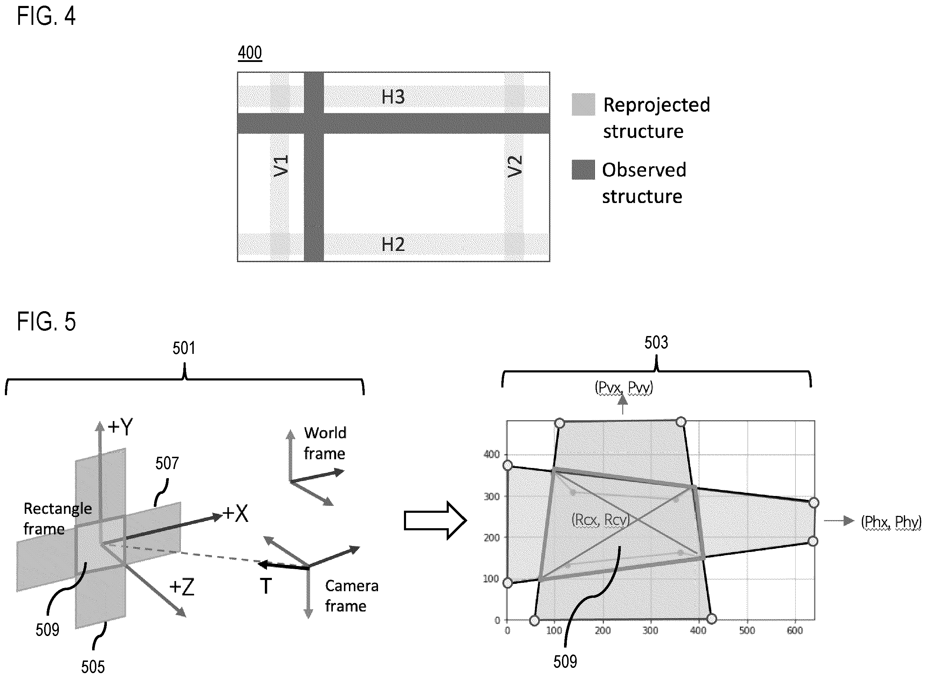

At step 303, the image processing circuitry or other component of the server 213 and/or device 201/241 determines an approximate pose of the camera device at a time the image was captured. In one example embodiment, the approximate pose is based on a prior pose coupled with a relative pose change up to the time the image was captured. By of example, the prior pose could come from SAVLoc itself (e.g., when the structure was last seen) or from another localization modality (e.g., any modality other than SAVLoc). The relative pose change could be obtained from odometry from, for example, visual-inertial sensors or wheel measurements. Given the approximate current camera pose, the structure labels can be obtained by projecting all candidate objects into the camera's image plane and determining which candidate is "closest" to the observed object. For example, as shown in example 400 of FIG. 4, candidate vertical structures V1 and V2 are reprojected into the image plane based on the approximate pose and the known locations of these structures. The observed vertical structure is given the label V1 since V1 is closer than V2 (as well as any other reprojected vertical structure). Similarly, the horizontal structures are respectively given the label H2 and H3. The candidate objects, for instance, can be queried from the database of known objects based on the approximate pose.

In one embodiment, the approximate pose of the camera device can be obtained by fusing the SAVLoc pose estimates with absolute pose estimates. The SAVLoc algorithm assumes that the initial camera pose in the world frame is known and that the approximate pose required for correspondence can be estimate by combining prior SAVLoc and VIO/VO poses. In practice, the camera could get "lost" if the correspondence algorithm incorrectly identifies a structural component. In this case, it may be necessary to get the algorithm back on track by providing an absolute pose estimate. Absolute pose estimates could be obtained from known unique visual references with known locations. Examples include fiducial markers (sparsely placed) and human-readable barcodes or signs. In one example embodiment, the segmentation network can be trained to identify these references to obtain absolute pose estimates to correct any component identification error.

At step 305, the localization circuitry or other component of the server 213 and/or device 201/241 determines a correspondence of the one or more structural components to one or more known components based on the approximate pose. In one example embodiment, the correspondence label for an identified structural object can be determined from an approximate estimate of the current camera pose. As discussed above, this estimate could be obtained in general from a prior pose coupled with a relative pose change up to the current time. In other words, the approximate pose estimate can be used to determine what known components (e.g., determined from blueprint data) are computed to be visible in the capture image. Those known components that are computed to be visible in the image given the approximate pose are selected as candidate objects or structures. In this way, a correspondence between an observed structure (e.g., detected in the processed query image) and a candidate object projected back into the image plane can be determined. In general, the correspondence step is quite robust to errors in the prior or approximate pose. For example, if the spacing between known components is two meters, the drift of the VIO/VO could be up to a meter without resulting in a mislabeled component.

At step 307, the localization circuitry or other component of the server 213 and/or device 201/241 queries a database for one or more location coordinates of the one or more known components based on the correspondence. In other words, once the indices or other identification of the detected structural component is determined, the dimensions and world coordinates can be looked up and used for pose estimation. For example, the candidate object that is projected back into the image plane in step 305 and closest to the observed structure in the image can be selected as the corresponding known object/structure.

In one example embodiment, the database that is being queried stores the known structures and their respective location coordinates (e.g., in a world frame of reference as opposed to an image frame of reference to allow for common frame of reference across all images). An example of a world frame of reference includes but is not limited to an Earth-Centered, Earth-Fixed (ECEF) frame of reference which is a three-dimensional coordinate system that is fixed with respect to the Earth's center and rotates along with the Earth's rotation. In this frame, the origin is located at the center of the Earth, and the axes are fixed relative to the Earth's surface. Setting up structure information. It is contemplated that any world frame can be used according to the various embodiments described herein.

In one example embodiment, an application programming interface (API) and/or other type of interface, application, service, etc. can be used to input the structure coordinates and dimensions by ingesting, for instance, computer-aided design (CAD) blueprints, construction documents, or other equivalent digital records (also collectively referred to as blueprint data). The ingestion of the blueprint data comprises identifying known structural components and their respective locations to create corresponding data records in a database of known of components. Accordingly, each known component will have at a minimum a data recording identifying the component and locations of the component and/or one or more features of the component (e.g., edges, corners, centroid, etc.).

At step 309, the localization circuitry or other component of the server 213 and/or device 201/241 computes a pose estimation of the camera device based on one or more location coordinates and the one or more pixel coordinates. In one example embodiment, the pose estimation algorithm depends on what structures are observed in the image.

For example, option A for pose estimation can be used for when intersecting vertical and horizontal structural components are observed. Option A is illustrated with respect to FIG. 5 which shows a camera view 501 of overlapping horizontal and vertical structural components and a corresponding image 503 with labeled horizontal vertical vanishing points. As shown in FIG. 5, if an intersection of a vertical structure 505 and horizontal structures 507 is seen in the image 503, the overlapping rectangular area 509 can be used for pose estimation. From the correspondence labels of the components, the 3D coordinates of rectangle's corner coordinates in the world frame can be looked up (e.g., queried from a database of known components). Then, given the 2D-3D correspondences of the corners (i.e., 2D image coordinates in the image and the corresponding 3D world coordinates), the 6DoF camera pose in the world frame can be computed using a Perspective-n-Point (PnP) algorithm or equivalent.

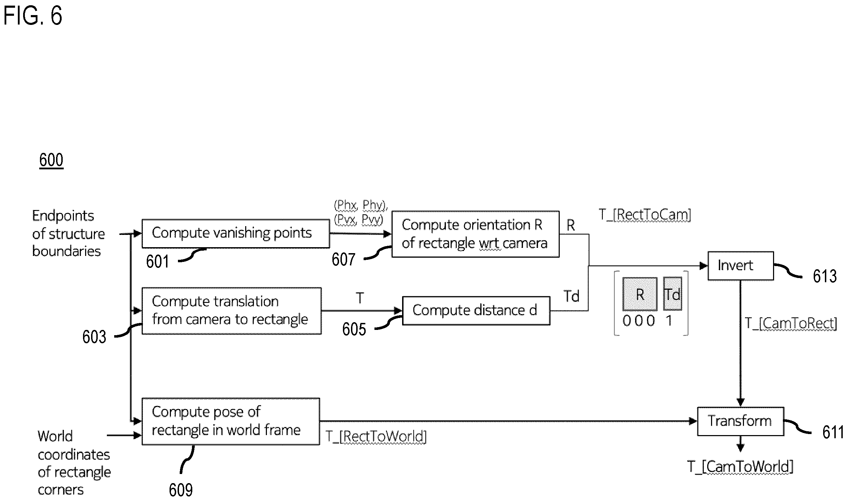

FIG. 6 is a diagram of an alternate pose estimation algorithm 600 (e.g., option B) when viewing overlapping horizontal and vertical structural components, according to one example embodiment. Whereas the PnP algorithm (e.g., option A described above) can be used to compute the camera pose for any well-conditioned set of at least three correspondences, the algorithm 600 of FIG. 6 is a more specific algorithm for when the four corners of a rectangle are observed. This algorithm advantageously has lower complexity compared to option A and is useful for deriving algorithms for viewing only horizontal or vertical components. The algorithm 600 relies first on determining the pose of the rectangle in the camera frame. The algorithm 600 is discussed with respect to FIG. 5. The rectangle frame 509, as shown on the corresponding image 503 of FIG. 5, has the origin at the rectangle center and the X and Y axes parallel respectively to the horizontal and vertical structures. The rotation of the rectangle frame with respect to the camera can be determined using the vanishing points of the structures in the image plane. Given the endpoints of the structural components in the image, the vanishing point coordinates can be computed (at block 601).

For example, let (Pvx, Pvy) and (Phx, Phy) be the respective coordinates for the vertical and horizontal components. Given the focal length f of the camera, it is noted that the vector [Phx, Phy, fJ projecting from the camera origin is parallel (in the world frame) to the horizontal structure. Similarly, [Pvx, Pvy, fJ is parallel to the vertical structure. Letting N(v) denote the normalized vector of v, the 3D orientation matrix R of the rectangle frame with respect to the camera frame can be derived from the three orthonormal vectors N([Phx, Phy, f]), N([Pvx, Pvy, f]), and their cross product. The translation from the camera to the rectangle frame is parallel to the vector N([Rcx, Rcy, f]) (at block 603). The distance d between the origins can be computed by minimizing the reprojection error of the corners (at block 605). Based on letting d be this distance, the translation of the shelf in the camera frame is T = dN([Rcx,Rcy,f]). From R and T, the relative 6DoF pose of the shelf in the camera frame can be expressed with a 4-by-4 spatial transformation matrix as T_[RectToCam] (at block 607). The pose of the rectangle in the world frame T_[RectToWorld] can be derived from the correspondence labels and resulting world coordinates of the structural components (at block 609). Then, the pose of the camera in the world frame is given by T_[CamToWorld] = inv(T_[RectToCam]) * T_[RectToWorld] (at block 611), where inv(M) denotes the inverse of the square matrix M (at block 613).

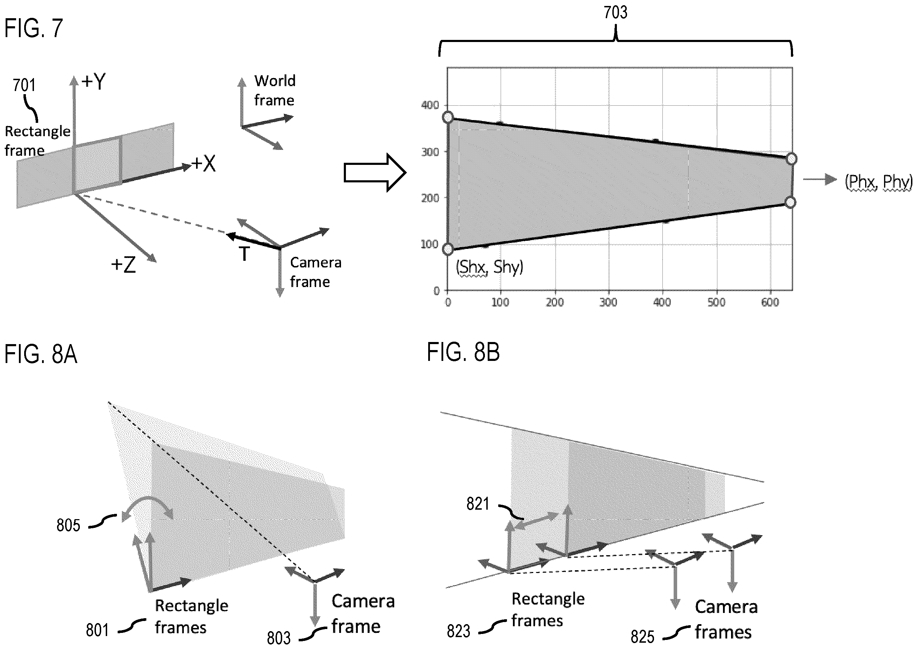

In one example embodiment, the pose estimation can be performed using the horizontal structural component only. Here only a horizontal component is observed as shown in FIG. 7. A rectangle frame 701 is defined with the x-axis parallel to the horizontal structure but with the origin on the lower edge of image plane 703 on which the structure is represented. FIG. 8A illustrates that for a given translation between the shelf frame 801 (e.g., rectangle frames) and camera frame 803, the pitch 805 of the shelf frame 801 with respect to the camera frame 803 is ambiguous because for different rotations about the rectangle frame's x-axis, the resulting image could be the same. As shown in FIG. 8B, because there are no visible vertical components, there is also ambiguity of where along the bottom edge of the structure the origin lies. In other words, the shift 821 of the rectangle frame 823 along its x-axis relative to the camera frame 825 is ambiguous. To resolve either ambiguity, one could use the corresponding rotation or shift estimates derived from the approximate current pose (ACP). Once these ambiguities are resolved, the remaining 4 degrees of freedom can be determined from the segmented image and following a similar derivation as above for only the horizontal vanishing point.

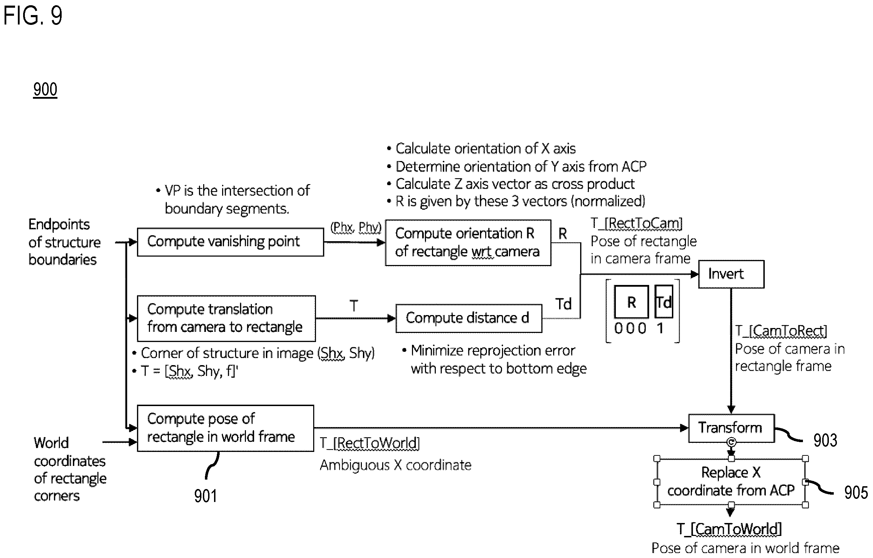

Details of an algorithm for pose estimation based on horizontal structural component only are illustrated in FIG. 9. The algorithm 900 is analogous to the algorithm of vertical and horizontal components illustrated in FIG. 6. However, because of the ambiguities discussed above, the x coordinate of the rectangle in the world frame T_[RectToWorld] output from block 901 is ambiguous. As a consequence, the resulting pose of the camera in the world frame resulting from the transform is also ambiguous (at block 903). To resolve the ambiguity, the x coordinate from the ACP is used to replace the x coordinate in the ambiguous result to compute the pose of the rectangle in the world frame given by T_[CamToWorld] (at block 905).

In one example embodiment, the pose estimation based on vertical structural components only is similar to the horizontal case but with ambiguity in the rotation and translation about the vertical axis addressed with the appropriate estimates from the approximate current pose.

In one example embodiment, the SAVLoc process can also use alternative visual sensing modalities. For example, depth data from stereo cameras or time-of-flight cameras could be used to augment the pose estimation algorithm.

At optional step 311, the localization circuitry or other component of the server 213 and/or device 201/241 localizes the mobile agent based on the pose estimation (e.g., when the camera device is equipped on a mobile agent). As previously discussed, the camera device is fixed with a known spatial relationship to the mobile agent. Therefore, the known spatial relationship (e.g., known mounting location of the camera device to the mobile agent) can be used to derive the pose of the agent from the pose estimation of the camera device based on the spatial relationship. The derived pose of the mobile agent represents the localization of the mobile agent.

In one example embodiment, the SAVLoc pose estimates from multiple cameras can be fused into a single estimate. Mobile agents often have multiple cameras to enable different applications. For example, the VOXL navigation module used for drones has a front-facing VGA stereo camera pair and a downward-facing VGA camera with a fisheye lens. Images from different cameras can provide independent SAVLoc pose estimates which can be combined based on the error covariance statistics to provide a single final pose estimate.

FIG. 11 is a diagram of a drone path tracked using SAVLoc, according to one example embodiment. The example of FIG. 11 illustrates a user interface 1100 displaying a representation of a drone flight path 1101 tracked using SAVLoc. SAVLoc pose estimates are computed and occur when a structural component of the shelf 1103 is seen by a camera of a drone flying within vicinity of the shelf 1103 located in an indoor warehouse. In this example, a YOLOv8 network was trained to robustly segment vertical and horizontal structural components using only a couple hundred hand-labeled images. The total time to label and train the data was on the order of hours.

FIG. 11 shows the estimated SAVLoc positions (e.g., indicated by flight path 1101) superimposed on the shelf structure 1103. SAVLoc pose estimates are provided whenever the structure is seen (Vertical, Horizontal, or both). In this example, a single fiducial tag is used for SAVLoc to initiate its position. In comparison, a traditional FidLoc process will require many more tags resulting in a significantly higher overhead cost and complexity of implementation.

By way of example, the inference time for YOLO segmentation was 120ms with a CPU and 20ms with an RTX 2080Ti GPU. The remaining SAVLoc computation requires only a few ms with a CPU. Hence a single GPU could be multiplexed to serve 50 devices at 1Hz each. In practice, an update rate of 1Hz has been demonstrated to be sufficiently high to correct VIO drift and navigate a drone in an indoor warehouse.

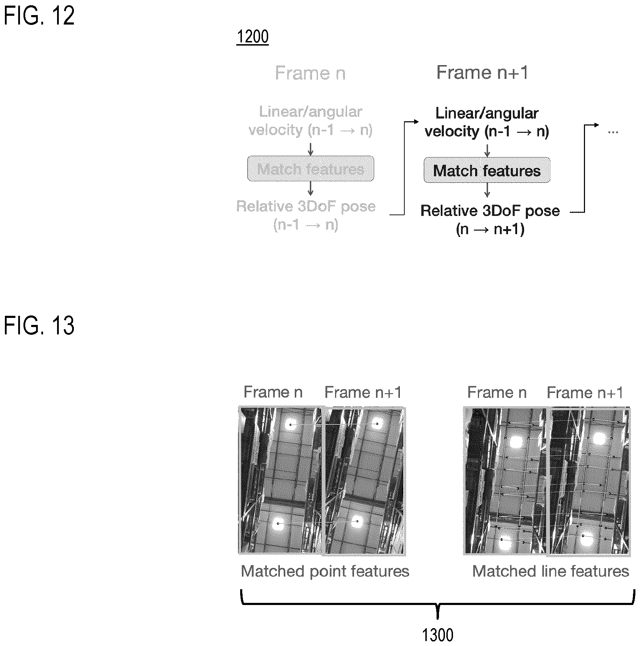

The above example embodiments are generally discussed with respect to an example of SAVLoc using VIO or equivalent to provide for pose estimation at 6DoF. However, as previously discussed, in cases where 3DoF is sufficient (e.g., ground-based mobile agents with no roll or pitch rotation), simpler VO can be used to avoid eliminate the use of IMUs for VIO measurements. FIG. 12 is a diagram of visual odometry implemented for visual localization, according to one example embodiment. In one example embodiment, the structural components used to aid localization for ground-based mobile agents are overhead ceiling lights and related structural components (e.g., overhead beams, power lines, etc.). In this scenario, a ceiling-facing camera is attached rigidly to the mobile agent of interest. The camera intrinsics are assumed known, acquired from a one-time calibration process. Three degrees of freedom of the camera extrinsics are assumed known from calibration measurements: height (Z coordinate), roll orientation (rotation about the X axis), and pitch orientation (rotation about the Y axis). We can make a simplifying assumption that the camera is pointing straight up so that its axis is orthogonal to the ground plane (and hence roll and pitch are zero). In general, roll and pitch can be measured through a calibration process and accounted for in the pose calculation. The remaining three degrees of freedom (XY coordinates and yaw orientation) are estimated by SAVLoc according to the various embodiments described with respect to FIG. 1C.

As with 6DoF SAVLoc, input images are processed using image segmentation. Images are time-stamped with the time of capture and are processed one-by-one by a neural network pre-trained for the task of image segmentation. Namely, the NN identifies pixels associated with desired ceiling structures such as lights and supports. Given the segmentation masks, additional processing would determine the image coordinates of the segmented structures. For example, circular lights would each have an XY image coordinate, and linear lights and structures would have XY coordinates for each endpoint. The image coordinates, along with the confidence (from 0.0 to 1.0) of each segmented structure, make up the output of the image segmentation process.
Image segmentation can be performed using neural networks. For example, neural network architectures such as Mask R-CNN and YOLOv8 can be trained to segment structural components. The network could be trained on camera-captured images with hand-labeled object classes (round lights, light tubes, ceiling structures). Alternatively, the network could be trained on synthetic rendered images whose domains have been transferred to the query image domain which could be specific, for example, to the environment lighting or image characteristics. If the number of object classes is small, then the labeling and training has low complexity.

In one example embodiment, the SAVLoc based on VO uses a ceiling map. Given a world coordinate frame (e.g., with the origin in the corner of the warehouse, and the XY plane as the ground plane and Z pointing vertically up), the 3D coordinates in the world frame of each light structure are assumed known. The X, Y coordinates can be obtained from a blueprint, and the Z coordinate can be measured with a laser range finder. As described in the tracking algorithm below, the other ceiling structures do not need to have their XY coordinates known, only the height (Z coordinate) needs to be known approximately. (If the full XYZ coordinates are known, this would improve the algorithm performance.)

In one example embodiment, the SAVLoc process uses visual odometry. The goal of visual odometry is to determine the relative 3DoF pose change between successive image frames, based on matching segmented features across the frames. This technique considers frame n+1. As shown in FIG. 12, the algorithm 1200 computes the linear and angular velocity from frame n-1 to n based on the prior relative 3DoF pose from frame n-1 to n. The velocity is the change in linear or angular displacement divided by the time between frames. Assuming the velocity is unchanged from frame n to n+1, the features found in frame n can be projected into the image plane and matched with the closest observed features in frame n+1. Examples 1300 of point and line features are shown in FIG. 13. Given these matches, the algorithm 1200 can compute the actual linear and angular displacement from frame n to n+1. This calculation requires the approximate height of the ceiling features only, not their coordinates in the ceiling plane. This algorithm can be generalized with a sliding window of multiple frames. The estimated velocities can be used to predict motion even when images are not available, for example, due to a camera outage.

Relocalization can then be performed. From those features detected in frame n+1 which have known 3D locations (e.g., lights), the correspondences between the 3D world coordinates and 2D image coordinates can be used to estimate the 3DoF pose of the camera in the world frame using a special case of the perspective-n-point algorithm.

In one example embodiment, the relocalization algorithm can be further refined if the lights can be individually distinguished. For example, the general relocalization algorithm described above assumes that the lights are identical. However, if they can be distinguished, then the relocalization algorithm could be made more robust by loosening the required accuracy of the prior velocity. Ways of distinguishing lights include but are not limited to:
- On/off status. The segmentation network can be trained to distinguish between lights that are on or off.
- Temperature. Using smart bulbs, the temperature of the lights could be chosen from a set of fixed values. If the temperature changes are too subtle for a segmentation network to detect, a separate processing step could be added to estimate the temperature.
- On/off sequences. Some smart bulbs can be programmed to switch on and off rapidly according to pre-determined sequences but imperceptible to the human eye. Different lights could be assigned different sequences. A separate processing step for detecting sequences after segmentation would be required.
- Translation or rotation offset. In practice, the actual location of an installed light may not match its location on the blueprint. It is possible to detect an offset of a particular light if we notice that its reprojected location has a consistent bias compared to the blueprint location. The lighting map can be updated to account for this offset. Similarly, for square or rectangular lights, they may be installed with a slight rotation with respect to the world XY axes. The rotation could be estimated and added for a given light as a supplemental parameter.

In one example embodiment, the SAVLoc pose estimates based on VO can be fused with absolute pose estimates. In practice, the camera could get "lost" if the VO tracking fails due, for example, to missing images. In this case, it may be necessary to get the algorithm back on track by providing an absolute pose estimate. Absolute pose estimates could be obtained from known unique visual references with known locations. Examples include fiducial markers (sparsely placed) and human-readable barcodes or signs. The segmentation network would need to be trained to identify these references.

In one example embodiment, VIO can be used as an alternative to VO. For example, a more expensive visual-inertial odometry system could be implemented on the device to more accurately track the agent compared to visual odometry.

In one example embodiment, SAVLoc based on VO can be used for anomaly detection. In many use cases (e.g., bed tracking in hospitals), the mobile agent should stay within prescribed areas or paths. If the agent detects that it has deviated from these areas, for example, if the detected light pattern does not correspond to the expected pattern, then an alert can be sent to the operator. An unexpected light pattern could also indicate other anomalous conditions, such as a camera installed incorrectly. In this case too, an alert could be sent.

SAVLoc based on VO advantageously provides for privacy preservation. For example, the system is privacy-preserving if the camera is facing the ceiling and no one and/or any privacy-sensitive information is in its field of view.

In one example embodiment, SAVLoc based on VO can also be used for map generation. It has been assumed that a lighting map of the environment is available, for example from a blueprint of the electrical system. In practice, one could generate the lighting map using VO and using some prior knowledge of the ceiling structure. Alternatively, a more general visual localization system such as HLOC could be used to build a point cloud map of the ceiling. Then, the light features could be extracted from this map.

In one example embodiment, the upward facing camera can be tilted at any other designated angle. In some scenarios, it is assumed that the camera is point straight up at the ceiling (so there is no roll or pitch rotation, only yaw). In general, if the camera is fixed to the agent, the roll and pitch angles can be measured using a one-time extrinsic calibration process. Then the VO and relocalization algorithms can be generalized to account for non-zero roll and pitch angles. An alternative way to measure the tilt is with respect to the gravity vector which can be estimated using a low-cost 3D accelerometer.

The various embodiments described herein advantageously provide for real-time processing. As previously discussed, the system can be implemented both as a server-based and agent-based versions. For the server-based system, in one example implementation, images were captured by a camera connected to a Raspberry Pi 4 device and communicated over WiFi to a Lambda GPU laptop for processing. The total processing time per image was about 20ms, suggesting that SAVLoc pose estimates based on VO could be obtained at about 50Hz. For the agent-based system, all processing was performed by a Jetson Nano. The processing time per image was about 170ms, suggesting that pose estimates could be obtained at about 5Hz. This rate is sufficient for tracking ground-based agents moving at about a few meters per second (walking rate). For comparison the processing time for HLOC is about 800ms per image. The time is much higher because of the complexity required for 6DoF pose estimation from a single image. It is noted that discussion of specific hardware and performance in relation to the various embodiments are provided by way of illustration and not as limitations.

Returning to FIGs. 2A and 2B, in one example embodiment, the devices 201 and 241 and server 213 can include one or more devices or apparatuses, for example, standalone cameras, User Equipment (UE) devices, IoT devices, and/or any other device capable of acquiring sensor information from which structural component features can be extracted for structure/light-aided visual localization according to the various example embodiments described herein. In another example, the devices 201 and 241 and server 213 can be implemented, respectively, in the standalone camera, User Equipment (UE) device, IoT device, and/or any other device capable of providing structure/light-aided visual localization of the various embodiments described herein. Such devices can include but are not limited to a mobile device, a smartphone, smart glasses, a smart visor, a mobile communication device, an infotainment device, a navigation device, a smart watch, a television, a display, a vehicle, a smart lamppost, a smart streetlight, etc. or any combination thereof. By way of example, the devices 201 or 241 (user equipment (UE) devices) can be any type of mobile terminal, user terminal, fixed terminal, or portable terminal including a mobile handset, station, unit, device, wearables (e.g., smart glasses, augmented reality (AR) glasses, smart visor or shield), mobile communication device, multimedia computer, multimedia tablet, Internet node, communicator, desktop computer, laptop computer, notebook computer, netbook computer, tablet computer, personal communication system (PCS) device, personal navigation device, personal digital assistants (PDAs), point of sales (POS) device, audio/video player, digital camera/camcorder, positioning device, fitness device, television receiver, radio broadcast receiver, electronic book device, game device, display device, vehicle, smart lamppost, smart streetlight, including the accessories and peripherals of these devices, or any combination thereof. It is also contemplated that a UE can support any type of interface to the user (such as "wearable" circuitry, etc.). In one instance, an IoT device may include one or more remote sensor devices, a wearable, a UE, or a combination thereof. Also, the UEs may be configured to access the communications network by way of any known or still developing communication protocols. In one example embodiment, privacy preserving masking function (e.g., encoding and/or decoding) can be implemented in any of the above-mentioned device or apparatus.

In one example, the devices 201 and 241 and/or server 213 include one or more device sensors (e.g., a front facing camera, a rear facing camera, digital image sensors, LiDAR (light detection and ranging) sensor, global positioning system (GPS) sensors, sound sensors, radars, infrared (IR) light sensors, microphones, height or elevation sensors, accelerometers, tilt sensors, moisture/humidity sensors, pressure sensors, temperature sensor, barometer, NFC sensors, wireless network sensors, etc.) and clients (e.g., mapping applications, navigation applications, image processing applications, augmented reality applications, image/video application, modeling application, communication applications, etc.). In one example, GPS sensors can enable the devices 201 and 241 to obtain geographic coordinates from one or more satellites for determining current or live location and time. Further, a user location within an area may be determined by a triangulation system such as A-GPS (Assisted-GPS), Cell of Origin, or other location extrapolation technologies when cellular or network signals are available. Further, the devices 201 and 241 can include one or more flash devices, e.g., a black light infrared flash.

In one example embodiment, the server 213 and/or devices 201 and/or 241 of the system can perform functions related to providing spatial-temporal authentication as discussed with respect to the various embodiments described herein. In one instance, the authentication platform 117 can be implemented in a standalone server computer or a component of another device with connectivity to the communications network 211. For example, the component can be part of an edge computing network where remote computing devices are installed within proximity of a geographic area of interest, one or more assets/objects/individuals to be monitored, or a combination thereof.

In one instance, the server 213 and/or devices 201 and/or 241 can include one or more neural networks or other machine learning algorithms/systems to process image date, such as images/frames of an input (e.g., a video stream or multiple static/still images, or serial or satellite imagery) (e.g., using an image segmentation algorithm) to extract structural object features. In one instance, the neural network is a convolutional neural network (CNN) which consists of multiple layers of collections of one or more neurons (which are configured to process a portion of an input data).

In one example, the server 213 and/or devices 201 and/or 241 have communication connectivity to one or more services platforms (e.g., services platform 225) and/or one or more software applications that provides one or more services 227 that can use the output (e.g., authentication output 115) of the system. By way of example, the communication connectivity can be internal connection within the apparatuses and/or happen over the communications network 211. By way of example, the one or more services 227 may also include mapping services, navigation services, notification services, social networking services, content (e.g., audio, video, images, etc.) provisioning services, application services, storage services, augmented reality (AR) services, location-based services, information-based services (e.g., weather, news, etc.), payment services, market place services, data analytics services, etc. or any combination thereof.

In one example, one or more devices 201 and 241 may be configured with one or more various sensors for acquiring and/or generating sensor data for real-time use. For example, the sensors can capture one or more images of a geographic area and/or any other sensor data (e.g., LiDAR point clouds, infrared scans, radar scans, etc.) that can be used for real-time object tracking or analytics for spatial-temporal authentication according to the embodiments described herein.

In one example, the components of the system may communicate over one or more communications networks 211 that includes one or more networks such as a data network, a wireless network, a telephony network, or any combination thereof. It is contemplated that the communication network 211 may be any local area network (LAN), metropolitan area network (MAN), wide area network (WAN), a public data network (e.g., the Internet), short range wireless communication network, or any other suitable packet-switched network, such as a commercially owned, proprietary packet-switched network, e.g., a proprietary cable or fiber-optic network, and the like, or any combination thereof. In addition, the communication network 211 may be, for example, a cellular telecom network and may employ various technologies including enhanced data rates for global evolution (EDGE), general packet radio service (GPRS), global system for mobile communications (GSM), Internet protocol multimedia subsystem (IMS), universal mobile telecommunications system (UMTS), worldwide interoperability for microwave access (WiMAX), Long Term Evolution (LTE) networks, 5G/3GPP (fifth-generation technology standard for broadband cellular networks / 3^{rd} Generation Partnership Project) or any further generation, code division multiple access (CDMA), wideband code division multiple access (WCDMA), wireless fidelity (Wi-Fi), wireless LAN (WLAN), Bluetooth^{®}, UWB (Ultrawideband), Internet Protocol (IP) data casting, satellite, mobile ad-hoc network (MANET), and the like, or any combination thereof.

In one example, the system or any of its components may be a platform with multiple interconnected components (e.g., a distributed framework). The system and/or any of its components may include multiple servers, intelligent networking devices, computing devices, components, and corresponding software for spatial-temporal authentication. In addition, it is noted that the system or any of its components may be a separate entity, a part of the one or more services, a part of a services platform, or included within other devices, or divided between any other components.

By way of example, the components of the system can communicate with each other and other components external to the system using well known, new or still developing protocols. In this context, a protocol includes a set of rules defining how the network nodes, e.g. the components of the system, within the communications network interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

The processes described herein for providing structure/light-aided visual localization may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

Additionally, as used herein, the term 'circuitry' may refer to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term `circuitry' as used herein also includes, for example, a baseband integrated circuit or applications processor integrated circuit for a mobile phone or a similar integrated circuit in a server, a cellular device, other network device, and/or other computing device.

FIG. 14 illustrates a computer system 1400 upon which an embodiment of the invention as described with the processes 100, 120, 300, 600, 900, and 1200 may be implemented. Computer system 1400 is programmed (e.g., via computer program code or instructions) to provide structure/light-aided visual localization as described herein and includes a communication mechanism such as a bus 1410 for passing information between other internal and external components of the computer system 1400. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1410 includes one or more parallel conductors of information so that information is transferred quickly among devices coupled to the bus 1410. One or more processors 1402 for processing information are coupled with the bus 1410.

A processor 1402 performs a set of operations on information as specified by computer program code related to providing structure/light-aided visual localization. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 1410 and placing information on the bus 1410. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1402, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1400 also includes a memory 1404 coupled to bus 1410. The memory 1404, such as a random access memory (RAM) or other dynamic storage device, stores information including processor instructions for providing structure/light-aided visual localization. Dynamic memory allows information stored therein to be changed by the computer system 1400. RAM allows a unit of information stored at a location called a memory address to be stored and retrieved independently of information at neighboring addresses. The memory 1404 is also used by the processor 1402 to store temporary values during execution of processor instructions. The computer system 1400 also includes a read only memory (ROM) 1406 or other static storage device coupled to the bus 1410 for storing static information, including instructions, that is not changed by the computer system 1400. Some memory is composed of volatile storage that loses the information stored thereon when power is lost. Also coupled to bus 1410 is a non-volatile (persistent) storage device 1408, such as a magnetic disk, optical disk or flash card, for storing information, including instructions, that persists even when the computer system 1400 is turned off or otherwise loses power.

Information, including instructions for providing structure/light-aided visual localization, is provided to the bus 1410 for use by the processor from an external input device 1412, such as a keyboard containing alphanumeric keys operated by a human user, or a sensor. A sensor detects conditions in its vicinity and transforms those detections into physical expression compatible with the measurable phenomenon used to represent information in computer system 1400. Other external devices coupled to bus 1410, used primarily for interacting with humans, include a display device 1414, such as a cathode ray tube (CRT) or a liquid crystal display (LCD), or plasma screen or printer for presenting text or images, and a pointing device 1416, such as a mouse or a trackball or cursor direction keys, or motion sensor, for controlling a position of a small cursor image presented on the display 1414 and issuing commands associated with graphical elements presented on the display 1414. In some embodiments, for example, in embodiments in which the computer system 1400 performs all functions automatically without human input, one or more of external input device 1412, display device 1414 and pointing device 1416 is omitted.

In the illustrated embodiment, special purpose hardware, such as an application specific integrated circuit (ASIC) 1420, is coupled to bus 1410. The special purpose hardware is configured to perform operations not performed by processor 1402 quickly enough for special purposes. Examples of application specific ICs include graphics accelerator cards for generating images for display 1414, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1400 also includes one or more instances of a communications interface 1470 coupled to bus 1410. Communication interface 1470 provides a one-way or two-way communication coupling to a variety of external devices that operate with their own processors, such as printers, scanners and external disks. In general, the coupling is with a network link 1478 that is connected to a local network 1480 to which a variety of external devices with their own processors are connected. For example, communication interface 1470 may be a parallel port or a serial port or a universal serial bus (USB) port on a personal computer. In some embodiments, communications interface 1470 is an integrated services digital network (ISDN) card or a digital subscriber line (DSL) card or a telephone modem that provides an information communication connection to a corresponding type of telephone line. In some embodiments, a communication interface 1470 is a cable modem that converts signals on bus 1410 into signals for a communication connection over a coaxial cable or into optical signals for a communication connection over a fiber optic cable. As another example, communications interface 1470 may be a local area network (LAN) card to provide a data communication connection to a compatible LAN, such as Ethernet. Wireless links may also be implemented. For wireless links, the communications interface 1470 sends or receives or both sends and receives electrical, acoustic or electromagnetic signals, including infrared and optical signals, that carry information streams, such as digital data. For example, in wireless handheld devices, such as mobile telephones like cell phones, the communications interface 1470 includes a radio band electromagnetic transmitter and receiver called a radio transceiver. In certain embodiments, the communications interface 1470 enables connection to the communication network 211 for providing structure/light-aided visual localization.

The term computer-readable medium is used herein to refer to any medium that participates in providing information to processor 1402, including instructions for execution. Such a medium may take many forms, including, but not limited to, non-volatile media, volatile media and transmission media. Non-volatile media include, for example, optical or magnetic disks, such as storage device 1408. Volatile media include, for example, dynamic memory 1404. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 1478 typically provides information communication using transmission media through one or more networks to other devices that use or process the information. For example, network link 1478 may provide a connection through local network 1480 to a host computer 1482 or to equipment 1484 operated by an Internet Service Provider (ISP). ISP equipment 1484 in turn provides data communication services through the public, world-wide packet-switching communication network of networks now commonly referred to as the Internet 1490.

A computer called a server host 1492 connected to the Internet hosts a process that provides a service in response to information received over the Internet. For example, server host 1492 hosts a process that provides information representing video data for presentation at display 1414. It is contemplated that the components of system can be deployed in various configurations within other computer systems, e.g., host 1482 and server 1492.

FIG. 15 illustrates a chip set 1500 upon which an embodiment of the invention, for example, the components (e.g., may be implemented. Chip set 1500 is programmed to provide structure/light-aided visual localization as described herein and includes, for instance, the processor and memory components described with respect to FIG. 14 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1500 includes a communication mechanism such as a bus 1501 for passing information among the components of the chip set 1500. A processor 1503 has connectivity to the bus 1501 to execute instructions and process information stored in, for example, a memory 1505. The processor 1503 may include one or more processing cores with each core configured to perform independently. A multi-core processor enables multiprocessing within a single physical package. Examples of a multi-core processor include two, four, eight, or greater numbers of processing cores. Alternatively or in addition, the processor 1503 may include one or more microprocessors configured in tandem via the bus 1501 to enable independent execution of instructions, pipelining, and multithreading. The processor 1503 may also be accompanied with one or more specialized components to perform certain processing functions and tasks such as one or more digital signal processors (DSP) 1507, or one or more application-specific integrated circuits (ASIC) 1509. A DSP 1507 typically is configured to process real-world signals (e.g., sound) in real time independently of the processor 1503. Similarly, an ASIC 1509 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1503 and accompanying components have connectivity to the memory 1505 via the bus 1501. The memory 1505 includes both dynamic memory (e.g., RAM, magnetic disk, writable optical disk, etc.) and static memory (e.g., ROM, CD-ROM, etc.) for storing executable instructions that when executed perform the inventive steps described herein to provide structure/light-aided visual localization. The memory 1505 also stores the data associated with or generated by the execution of the inventive steps.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. An apparatus comprising means to perform:
process an image captured by a camera device to determine one or more pixel coordinates of one or more structural components depicted in the image;
determine an approximate pose of the camera device at a time the image was captured;
determine a correspondence of the one or more structural components to one or more known components based on the approximate pose;
query a database for one or more location coordinates of the one or more known components based on the correspondence; and
compute a pose estimation of the camera device based on the one or more location coordinates and the one or more pixel coordinates.

2. The apparatus of claim 1, wherein the camera device is equipped on a mobile agent, and wherein the apparatus is further caused to perform:
localize the mobile agent based on the pose estimation.

3. The apparatus of claim 1 or 2, wherein the one or more location coordinates, the pose estimation, or a combination thereof are in a world frame of reference.

4. The apparatus of any of claims 1-3, wherein the one or more structural components include one or more shelves, one or more containers, one or more door or window frames, one or more lights, one or more structural beams, or a combination thereof.

5. The apparatus of any of claims 1-4, wherein the approximate pose is based on a prior pose coupled with a relative pose change up to the time the image was captured.

6. The apparatus of claim 5, wherein the relative pose change is obtained from odometry.

7. The apparatus of claim 6, wherein the apparatus is caused to further perform:
process another image captured at another time to determine one or more other pixel coordinates of the one or more structural components,
wherein the odometry is based on a change between the one or more pixel coordinates and the one or more other pixel coordinates.

8. The apparatus of any of claims 1-7, wherein the approximate pose is based on another localization modality.

9. The apparatus of any of claims 1-8, wherein the identification of the one or more structural components is determined by causing the apparatus to further perform:
obtain one or more candidate objects from the database based on the approximate pose; and
cause a projection of the one or more candidate objects into an image plane of the image,
wherein the identification of the one or more structural components is based on a closest object of the one or more candidate objects to the one or more pixel coordinates.

10. The apparatus of any of claims 1-9, wherein the one or more structural components include one or more vertical structures, one or more horizontal structures, or a combination thereof.

11. The apparatus of claim 10, wherein the one or more vertical structures and the one or more horizontal structures intersect to form a rectangular area, and wherein the pose estimation is determined based on one or more vanishing points of the rectangular area in an image plane of the image.

12. The apparatus of any of claims 1-11, wherein the one or more known components, the one or more location coordinates, or a combination thereof are determined from blueprint data.

13. The apparatus of any of claims 1-12, wherein the estimation of the pose of the camera device, the computed pose of the camera device, or a combination thereof is determined with respect to six degrees of freedom.

14. The apparatus of any of claims 1-13, wherein the one or more structural components include one or more repetitive structures.

15. A computer-implemented method comprising:
processing an image captured by a camera device equipped on a mobile agent to determine one or more pixel coordinates of one or more structural components depicted in the image;
determining an approximate pose of the camera device at a time the image was captured;
determining a correspondence of the one or more structural components to one or more known components based on the approximate pose;
querying a database for one or more location coordinates of the one or more known components based on the correspondence;
computing a pose estimation of the camera device based on the one or more location coordinates and the one or more pixel coordinates; and
localizing the mobile agent based on the pose estimation.
